# EUROPÄISCHE PATENTANMELDUNG

(11) **EP 4 575 097 A1**
(43) Veröffentlichungstag der Anmeldung: **25.06.2025**
(21) Anmeldenummer: 24222049.9
(22) Anmeldetag: 20.12.2024
(51) Int. Cl.: E02B 3/02, E02B 9/02

(54) **HOCHWASSERSCHUTZSYSTEM**

(30) Priorität: 20.12.2023 DE 102023136702
(71) Anmelder: Motzkau, Kai, 42555 Velbert (DE)
(72) Erfinder: Motzkau, Kai, 42555 Velbert (DE)
(74) Vertreter: Weisse, Moltmann & Willems PartGmbB

(57) **Zusammenfassung**

Die Erfindung betrifft ein Hochwasserschutzsystem (10) an einem Fließgewässer (16) mit einem hochwassergefährdeten Bereich (18). Das Hochwasserschutzsystem (10) umfasst eine Hauptröhre (12) entlang des Fließgewässers (16) in diesem hochwassergefährdeten Bereich (18), wobei zumindest Teile des Fließgewässers (16) in Fließrichtung (28) durch die Hauptröhre (12) geleitet werden. Eine Antriebsturbine (62) in der Hauptröhre (12) erhöht der Fließgeschwindigkeit des Fließgewässers (16) bei Hochwasser in der Hauptröhre (12), wobei die Hauptröhre (12) wieder in das Fließgewässer (16) mündet.

## Beschreibung

### Technisches Gebiet

Die Erfindung betrifft ein Hochwasserschutzsystem an einem Fließgewässer mit einem hochwassergefährdeten Bereich, enthaltend eine Hauptröhre entlang des Fließgewässers in diesem hochwassergefährdeten Bereich, wobei zumindest Teile des Fließgewässers in Fließrichtung durch die Hauptröhre geleitet werden, eine Antriebsturbine in der Röhre zur Erhöhung der Fließgeschwindigkeit des Fließgewässers bei Hochwasser in der Röhre vorgesehen ist, wobei die Hauptröhre wieder in das Fließgewässer mündet.

### Stand der Technik

In vielen Flussregionen kommt es bei entsprechendem Hochwasser des Flusses zu Überschwemmungen. Hierdurch entsteht den Volkswirtschaften ein nicht unerheblicher wirtschaftlicher Schaden. Das Hochwasser gelangt dabei oft in Städte und zerstört große Teile von Wohn- und Industrieanlagen. Auch bei der Landwirtschaft können durch Überflutungen, wenn die landwirtschaftlichen Flächen nicht extra dafür vorgesehen sind, enorme Schäden entstehen. Gegen Hochwasser werden daher an den Flussläufen Deiche bzw. Dämme gebaut oder ggf. Rückhalteflächen gegen die erhöhten Wassermengen ausgewiesen. Bei Flüssen, welche durch Städte fließen, gestaltet sich solcher Hochwasserschutz wegen des großen Flächenverbrauchs oft als schwierig. Hier werden daher spezielle Hochwasserwände bei Hochwasser an den Flussrändern aufgestellt. Bei Deichen bzw. Dämmen besteht konstruktionsbedingt die Gefahr, dass sie aufweichen und brechen. Sie bestehen nämlich oft aus aufgeschüttetem Sand und/oder Schotter, welche durch Wurzeln von Pflanzen zusammengehalten werden. Hochwasserwände werden jedes Mal bei Hochwasser für den Hochwasserschutz aufgebaut. Das verursacht Kosten bei Land und Kommunen.

Die DE 102006001715 A1 beschreibt eine Einrichtung zum Verhindern eines Wasserüberfließens aus einem Fluss bei Hochwasser, die eine starre hohle Konstruktion, welches das Wasser nicht durchlässt und am Ufer des Flusses entlang platziert wird, vorsieht. Die Konstruktion wird aus Rohrhälften gefertigt, wobei die unteren Rohrhälften ständig auf dem Ufer des Flusses platziert sind. Die oberen Rohrhälften haben einen äußeren Durchmesser, die dem inneren Durchmesser der unteren Rohrhälften entspricht. Diese Konstruktionen dienen einerseits als Wall und andererseits kann durch sie Fließwasser geführt werden.

Die DE 10 2011 012 777 A1 richtet sich auf eine Vorrichtung und ein Verfahren zur Vorbeugung gegen Überschwemmungen. Durch eine einfache technische Bauweise wird Wasser aus einem hochwasserführenden Fluss mit Hilfe von Zuleitungsrohren und Hauptleitungsrohren in ein weiter entferntes Überflutungsbecken gepumpt.

Die DE 10 2013 109 763 A1 betrifft einen Hochwasserschutz an einem Fließgewässer mit einem hochwassergefährdeten Bereich, enthaltend eine Röhre entlang des Fließgewässers in diesem hochwassergefährdeten Bereich, wobei Teile des Fließgewässers in Fließrichtung durch die Röhre geleitet werden. Dort wird eine Antriebsturbine in der Röhre beschrieben, welche die Fließgeschwindigkeit des Fließgewässers in der Röhre erhöht. Hochwasser entsteht, weil mehr Wasservolumen in einem Fluss ankommt, als in dem Flussbett abfließen kann. Die Fließgeschwindigkeit ist für den Querschnitt zu gering. Das Wasser läuft über das Flussbett und sucht sich dann seinen zerstörerischen Weg in die Umgebung. Durch eine zu dem Flussbett parallele Röhre kann das Wasser zusätzlich fließen. In dieser Röhre befindet sich eine Antriebsturbine, welche die Fließgeschwindigkeit erhöht. Dadurch lässt sich kontrolliert mehr Wasservolumen bei gleichem Flussquerschnitt z.B. an einer Stadt vorbei befördern.

Die bekannten Hochwasserschutzsysteme haben den Nachteil, dass ein Überflutungsbecken vorgesehen sein muss, um das Wasser aus dem hochwassergefährdeten Bereich weg zu befördern. Ferner führen die Rohre im Normalzustand das Wasser ungewollt aus dem Fließgewässer an dem Hochwassergebiet vorbei. In Wärmeperioden mit Niedrigwasser kann so das Flussbett des Fließgewässers im Bereich des Hochwassergebiets schnell austrocknen. Dies schadet dort insbesondere auch der Flora und Fauna.

### Offenbarung der Erfindung

Aufgabe der Erfindung ist es daher insbesondere, die Nachteile des Standes der Technik zu vermeiden und ein Hochwasserschutzsystem zu schaffen, welches auch bei normalem Wasserstand eingesetzt werden kann.

Erfindungsgemäß wird die Aufgabe dadurch gelöst, dass bei einem Hochwasserschutzsystem an einem Fließgewässer mit einem hochwassergefährdetem Bereich der eingangs genannten Art, wenigstens ein Abzweigelement mit wenigstens zwei Röhrenabzweigungen vorgesehen ist, wobei der erste Röhrenabzweig in die Hauptröhre und der zweite Röhrenabzweig in eine Nebenröhre führt, wobei das Abzweigelement mit einer einstellbaren Absperrvorrichtung ausgebildet ist, welche einen Röhrenabzweig absperrt oder freigibt. Auf diese Weise kann entschieden werden, ob Wasser an dem hochwassergefährdeten Bereich vorbeigeführt wird oder direkt wieder in das Fließgewässer geleitet wird. Damit kann verhindert werden, dass ein Flussbett bei relativ geringem Wasserstand auszutrocknen droht, weil das Wasser durch die Röhren geführt wird.

Eine vorteilhafte Ausgestaltung des erfindungsgemäßen Hochwasserschutzsystems an einem Fließgewässer mit einem hochwassergefährdeten Bereich ergibt sich dadurch, dass die Absperrvorrichtung einen Schieber aufweist, der den Durchfluss der ersten Röhrenabzweigung und/oder der zweiten Röhrenabzweigung sperrt. Es sind mehrere Anwendungsfälle für den Schieber denkbar. So kann der Schieber einerseits eine Abzweigung versperren. So wird kein Wasser mehr durch das Abzweigelement geleitet. Andererseits kann der Schieber auch so ausgestaltet sein, dass er wahlweise entweder das eine Rohr oder das andere Rohr verschließt. Hierdurch kann der Wasserverlauf beeinflusst werden. Entweder wird das Wasser bei Hochwasser um den Gefahrenbereich herumgeleitet oder es fließt bei einem normalen Wasserstand des Fließgewässers direkt zurück.

Eine bevorzugte Ausgestaltung des erfindungsgemäßen Hochwasserschutzsystems wird dadurch erzielt, dass die Absperrvorrichtung einen mechanischen, elektrischen, hydraulischen, pneumatischen Antrieb zur Betätigung des Absperr- oder Freigabevorgangs aufweist. Die Absperrvorrichtung lässt sich so automatisieren. Es ist nun nicht notwendig, die Absperrvorrichtung manuell zu betätigen. Die Absperrvorrichtung wird dabei vorzugsweise durch einen Antrieb betrieben.

In einer besonderen Ausbildung des erfindungsgemäßen Hochwasserschutzsystems ist eine prozessorgesteuerte Steuerung für die Absperrvorrichtung vorgesehen. Für die Automatisierung der Absperrvorrichtung ist die Steuerung vorgesehen. Die Steuerung arbeitet mit einem Mikroprozessor, der sich leicht für die wesentlichen Steuerungsaufgaben programmieren lässt. Die Steuerung kann bei Bedarf auch aus der Ferne über Funk/Mobilfunk oder Kabel im Remote-Modus betätigt werden. Die Steuerung stellt die Absperrvorrichtung in geeigneter Weise ein, indem zum Beispiel der Antrieb für den Schieber angesteuert wird.

Eine weitere vorteilhafte Ausgestaltung des erfindungsgemäßen Hochwasserschutzsystems wird dadurch erreicht, dass wenigstens ein Wasserstandssensor vorgesehen ist, welcher den Wasserstand des Fließgewässers erfasst und an die prozessorgesteuerte Steuerung der Absperrvorrichtung zur Auswertung übermittelt. Um den Automatisierungsgrad noch weiter zu erhöhen kann die Steuerung mittels des Wasserstandssensors normalen Wasserstand oder ein Hochwasser ermitteln. Entsprechend kann die Absperrvorrichtung des Abzweigelements automatisch eingestellt werden.

Vorzugsweise wird dann die Steuerung bei einem Schwellwert für den Wasserstand die Absperrvorrichtung aktiviert, sodass sie entweder den ersten Rohrabzweig oder den zweiten Rohrabzweig freigibt bzw. sperrt.

In einer besonderen Ausbildung des erfindungsgemäßen Hochwasserschutzsystems unterstützt eine künstliche Intelligenz den Steuerungsvorgang. Hierbei kann durch die künstliche Intelligenz entschieden werden, ob tatsächlich ein Notfall durch ein Hochwasser entstehen kann oder nicht. Die künstliche Intelligenz kann mit verschiedenen Szenarien angelernt werden. Beispielsweise kann künstliche Intelligenz so angelernt werden, dass die Bugwelle eines Schiffes keinen Notfall für Hochwasser auslöst.

In einer weiteren bevorzugten Ausgestaltung des erfindungsgemäßen Hochwasserschutzsystems wird zumindest eine Röhre des zweiten Röhrenabzweigs in das Fließgewässer zurückgeführt, wobei ein Generator zur Stromerzeugung in dem zweiten Röhrenabzweig vorgesehen ist. Wenn kein Hochwasser vorhanden ist, lässt sich mit dem Generator in dem zweiten Röhrenabzweig Strom erzeugen. Der so erzeugte Strom kann in das öffentliche Netz zur nachhaltigen Stromerzeugung eingespeist werden.

Ferner lässt sich zudem eine besondere Ausgestaltung des erfindungsgemäßen Hochwasserschutzsystems an einem Fließgewässer dadurch erreichen, dass ein Gefälle für den zweiten Röhrenabzweig vorgesehen ist. Das Wasser wird bei einem normalen Wasserstand soweit durch die Röhre geleitet, bis ein ausreichendes Gefälle vorliegt. Dann kann die Nebenröhre in das Fließgewässer zurückgeführt werden. Mit der kinetischen Energie des zurückfließenden Wassers lässt sich ein Generator für die Stromerzeugung betreiben.

Ein Aspekt der Erfindung ist, dass nunmehr bei dem erfindungsgemäßen Hochwasserschutzsystem wenigstens eine der Röhren an einem äußeren Meanderrand des Fließgewässers angeordnet ist. Hier ist die Fließgeschwindigkeit des Wassers am größten, sodass hier, zum Beispiel im Hinblick auf einen Generator, sich die größte Wirkung erzielen lässt. In diesem Bereich halten sich wegen der erhöhten Fließgeschwindigkeit auch keine oder nur sehr selten Fische auf, welche in die Röhre ungewollt eingesaugt werden könnten.

Als vorteilhafte Ausgestaltung der Erfindung hat sich weiterhin erwiesen, wenn an dem Hochwasserschutzsystem eine Tierschutzvorrichtung vorgesehen ist, welche das Eindringen von Tieren in die Röhren verhindert. Hierdurch wird verhindert, dass Lebewesen ungewollt durch die Röhren geleitet werden und zu Schaden kommen. Beispielsweise kann dies durch eine siebartige bzw. netzartige Konstruktion bewirkt werden.

Weitere Ausgestaltungen und Vorteile ergeben sich aus dem Gegenstand der Unteransprüche sowie den Zeichnungen mit den dazugehörigen Beschreibungen. Ausführungsbeispiele sind nachstehend unter Bezugnahme auf die beigefügten Zeichnungen näher erläutert. Die Erfindung soll nicht alleine auf diese aufgeführten Ausführungsbeispiele beschränkt werden. Sie dienen lediglich zur näheren Erläuterung der Erfindung. Die vorliegende Erfindung soll sich auf alle Gegenstände beziehen, die jetzt und zukünftig der Fachmann als naheliegend zur Realisierung der Erfindung heranziehen würde.

### Kurze Beschreibung der Zeichnung

- Fig. 1: zeigt ein erstes Ausführungsbeispiel für ein fließendes Gewässer, an dem ein erfindungsgemäßes Hochwasserschutzsystem mit einem Abzweigelement mit zwei Röhrenabzweigungen angeordnet ist.
- Fig. 2: zeigt einen vergrößerten Ausschnitt des Abzweigelements gemäß Fig. 1, wobei die Absperrvorrichtung den ersten Röhrenabzweig versperrt und den zweiten Röhrenabzweig freigibt.
- Fig. 3: zeigt einen vergrößerten Ausschnitt des Abzweigelements gemäß Fig. 1, wobei die Absperrvorrichtung den zweiten Röhrenabzweig versperrt und den ersten Röhrenabzweig freigibt.
- Fig. 4: zeigt einen Abschnitt der ersten Röhre mit einer Antriebsturbine gemäß Fig. 1.
- Fig. 5: zeigt einen Querschnitt durch das Hochwasserschutzsystem gemäß Fig. 1 im Bereich der zweiten Röhrenabzweigung.
- Fig. 6: zeigt einen Querschnitt durch das Hochwasserschutzsystem Fig. 1 im Bereich der Antriebsturbine.
- Fig. 7: zeigt ein zweites Ausführungsbeispiel für ein fließendes Gewässer, an dem ein erfindungsgemäßes Hochwasserschutzsystem mit einem Abzweigelement mit zwei Röhrenabzweigungen angeordnet ist.

### Bevorzugtes Ausführungsbeispiel

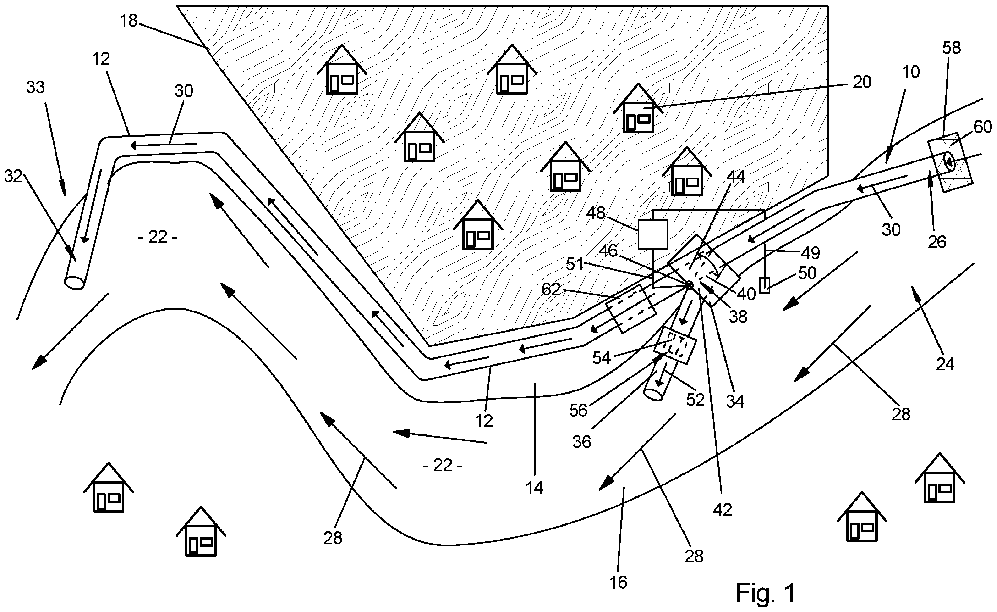

In Fig. 1 wird mit dem Bezugszeichen 10 ein erfindungsgemäßes Hochwasserschutzsystem bezeichnet. Das Hochwasserschutzsystem 10 weist eine erste Röhre, die Hauptröhre 12 auf, welche an dem Ufer 14 entlang eines Fließgewässers 16, wie einem Fluss, einem Bach oder einem Kanal, geführt ist. In einem hochwassergefährdeten Gebiet 18 sind vorzugsweise Gebäude 20 eines Dorfes oder einer Stadt angesiedelt. Bei Hochwasser des Fließgewässers sind diese Gebäude 20 stark betroffen und können erheblich von dem übertretenden Wasser beschädigt werden.

Die Hauptröhre 12 nimmt daher Wasser 22 im höher gelegenen oberen Bereich 24 des Fließgewässers 16 mit einem einleitenden Rohrende 26 auf. Die Fließrichtung des Wassers 22 wird durch die Pfeile 28 im Fließgewässer, durch die Pfeile 30 in der Hauptröhre 12 angedeutet. Die Hauptröhre 12 wird an dem hochwassergefährdeten Gebiet 18 vorbeigeführt und mündet mit einem ausleitenden Rohrende 32 in einem tiefer gelegenen unteren Bereich 33 des Fließgewässers 16. Die Hauptröhre 12 bildet dabei eine Barrikade gegen Hochwasser und dient somit selbst als Hochwasserschutz. Die Hauptröhre 12 bildet somit einen Bypass zum Fließgewässer 16, um die Wassermengen schneller um das hochwassergefährdeten Gebiet 18 bewegen zu können.

Im oberen Bereich 24 des Fließgewässers 16 ist in der Hauptröhre 12 ein Abzweigelement 34 eingesetzt. Das Abzweigelement 34 zweigt die Fließrichtung 30 der Hauptröhre 12 in eine zweite Röhre, die Nebenröhre 36 ab. Das in die Hauptröhre eintretende Wasser 22 kann auf diese Weise vor dem hochwassergefährdeten Gebiet 18 direkt wieder in das Fließgewässer 16 eingeleitet werden.

Das Abzweigelement 34 verfügt über eine einstellbare Absperrvorrichtung 38. Die einstellbare Absperrvorrichtung 38 besteht aus einem Schieber 40, welcher wahlweise den Durchfluss durch die Hauptröhre 12 oder die Nebenröhre 36 leitet. Dazu sperrt die Absperrvorrichtung 38 entweder einen Röhrenabzweig 42 zur Nebenröhre 36 oder einen Röhrenabzweig 44 zur Hauptröhre 12. Der Schieber 40 wird in diesem Ausführungsbeispiel über einen Elektromotor 46 angetrieben und in die gewünschte Stellung geschwenkt.

Der Elektromotor 46 wird über eine mikroprozessorgesteuerte Steuerung 48 betätigt. Die Steuerung 48 erhält ein Signal über eine Signalleitung 49 von einem Wasserstandssensor 50. Der Wasserstandssensor 50 liefert möglichst permanent den aktuellen Wasserstand des Fließgewässers 16. Die Steuerung 48 wertet kontinuierlich den Wasserstand aus.

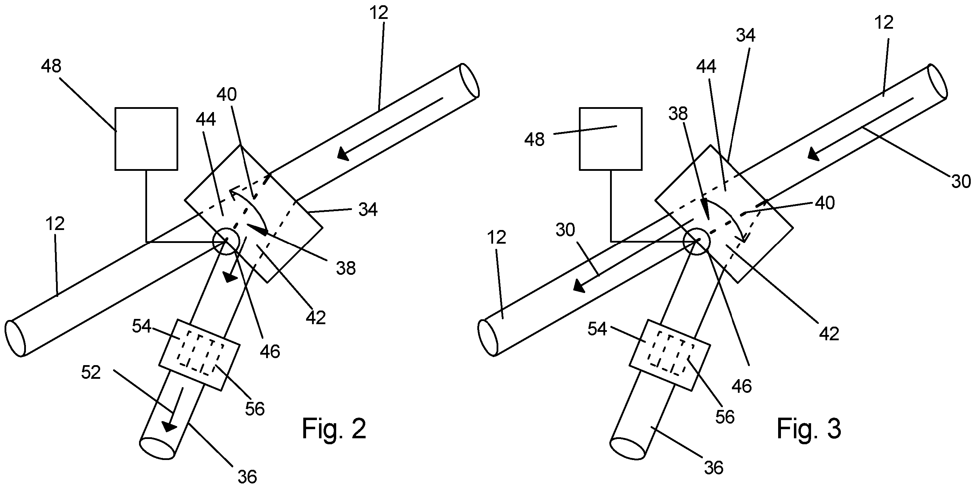

Wenn ein bestimmter Schwellwert überschritten wird, dann wird die Steuerung 48 aktiv. Die Steuerung 48 steuert über eine Steuerungsleitung 51 die Absperrvorrichtung 38 dahingehend, dass der Röhrenabzweig 42 zur Nebenröhre 36 durch den Schieber 40 gesperrt wird, wie es in Figur 3 dargestellt ist. Dazu wird der Elektromotor 46 angesteuert, welcher den Schieber 40 vor den Röhrenabzweig 42 zur Nebenröhre 36 verschließt. Die Steuerung 48 ist mit einer künstlichen Intelligenz ausgestattet. Die künstliche Intelligenz ist so angelernt, dass sie entscheiden kann, ob tatsächlich ein Hochwasser vorhanden ist. So kann beispielsweise verhindert werden, dass die Bugwelle eines Schiffs als Hochwasser erkannt wird.

Signalisiert der Wasserstandssensor 50 den Wasserstand unterhalb des Schwellwerts, dann wird die Hauptröhre 12 entsprechend mit dem Schieber 40 gesperrt.

Bei normalem Wasserstand, ist eine beschleunigte Weiterleitung des Wassers um das hochwassergefährdete Gebiet 18 nicht erforderlich. Daher wird in diesem Fall das Wasser mit dem Abzweigelement 34 in die Nebenröhre 36 geleitet, wie es in Figur 2 dargestellt ist. Mit Pfeilen 52 wird die Fließrichtung der Nebenröhre 36 angedeutet. Die Nebenröhre 36 mündet ebenfalls im oberen Bereich 24 vor dem hochwassergefährdeten Gebiet 18. In der Nebenröhre 36 ist ein Generator 54 angeordnet, welcher mit einem Turbinenantrieb 56 angetrieben wird. Die Nebenröhre 36 ist daher so angeordnet, dass ein hinreichendes Gefälle vorhanden ist, um ausreichende kinetische Energie für den Generator 54 zu erzeugen. Der Strom des Generators 54 kann beispielsweise die umliegenden Gebäude 20 mit elektrischer Energie versorgen.

Vor bzw. an dem einleitenden Rohrende 26 befindet sich eine Tierschutzvorrichtung 58. Diese Tierschutzvorrichtung 58 kann beispielsweise als Netz bzw. Sieb 60 ausgestaltet sein, welches verhindert das Tiere oder Pflanzen ungewollt in die Hauptröhre 12 gelangen.

Im Falle von Hochwasser ist das Abzweigelement 34 so eingestellt, dass nur die Hauptröhre 12 durchgängig ist. Eine Antriebsturbine 62 saugt das Wasser 22 aus dem Fließgewässer 16 in die Hauptröhre 12 an. Das Wasser 22 wird mit der Antriebsturbine 62 beschleunigt, um das hochwassergefährdete Gebiet 18 mit erhöhter Fließgeschwindigkeit herumgeleitet und wieder im unteren Bereich in das Fließgewässer 16 eingeleitet.

In Fig. 2 wird ein vergrößerter Ausschnitt des Abzweigelements 34 gemäß Fig. 1 dargestellt. Die Absperrvorrichtung 38 versperrt hier den Röhrenabzweig 44 zur Hauptröhre 12. Der Röhrenabzweig 42 zur Nebenröhre 36 ist, wie oben beschrieben, freigegeben. Das Wasser 22 fließt somit mit Fließrichtung 52 durch die Nebenröhre 36. Dabei wird der Generator 54 zur Stromerzeugung angetrieben. Dieser Betriebsmodus wird verwendet, wenn der Wasserstand normal ist. Die Hauptröhre 12, kommt in dieser Stellung des Schiebers 40 nicht zum Einsatz. Der Schieber 40 wird über den Elektromotor 46 eingestellt. Die die Steuerung 48 regelt den Elektromotor 46 und damit auch die Stellung des Schiebers 40.

In Fig. 3 wird ein vergrößerter Ausschnitt des Abzweigelements 34 gemäß Fig. 1 dargestellt. Die Absperrvorrichtung 38 versperrt hier den Röhrenabzweig 42 zur Nebenröhre 36. Der Röhrenabzweig 44 zur Hauptröhre 12 ist, wie oben beschrieben, freigegeben. Dieser Betriebsmodus wird bei Hochwasser verwendet. Das Wasser 22 fließt somit mit Fließrichtung 30 durch die Hauptröhre 12. Die Nebenröhre 36 wird in vorliegender Stellung des Schiebers 40 nicht verwendet. Der Schieber 40 wird über den Elektromotor 46 eingestellt. Die Steuerung 48 regelt den Elektromotor 46 und damit auch die Stellung des Schiebers 40.

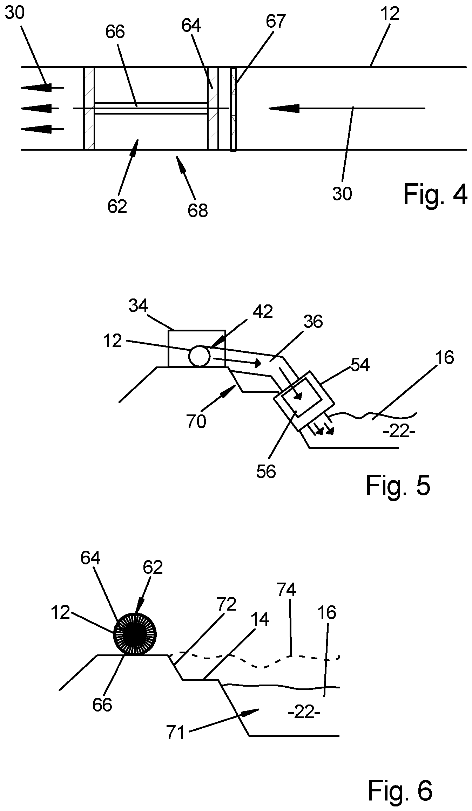

Fig. 4 zeigt einen Abschnitt der Hauptröhre 12 mit der Antriebsturbine 62 gemäß Fig. 1. Die Hauptröhre 12 des Hochwasserschutzsystems 10 ist als Prinzipskizze in einem Längsschnitt dargestellt. Innerhalb der Hauptröhre 12 ist die Antriebsturbine 62 vorgesehen. Die Antriebsturbine 62 enthält Turbinenschaufeln 64, welche an einer Antriebswelle 66 rotationssymmetrisch angeordnet sind. Die Turbinenschaufeln 64 sind derart ausgestaltet, dass sie bei Rotation der Antriebswelle 66 das durchfließende Wasser bei Hochwasser in Fließrichtung entsprechend der Pfeile 30 beschleunigen. Leitschaufeln 67 leiten das Wasser 22 im optimalen Winkel auf die Turbinenschaufeln 64. Damit wird erreicht, dass das durch die Hauptröhre 12 fließende Wasservolumen, aufgrund der höheren Fließgeschwindigkeit, in einem Zeitintervall erheblich vergrößert wird. Die Fließgeschwindigkeit durch die Hauptröhre 12 kann an das jeweilige Hochwasser angepasst werden. Die Antriebsturbine 62 arbeitet in bekannter Umkehrfunktion auch als elektrischer Generator 68, der seine elektrische Energie in das Stromnetz einspeisen kann.

Fig. 5 zeigt einen Querschnitt durch das Hochwasserschutzsystem 10 gemäß Fig. 1 im Bereich der Röhrenabzweigung 42 zur Nebenröhre 36. Die Nebenröhre 36 ist so angeordnet, dass sie ein Gefälle 70 aufweist. Das Wasser 22, welches durch die Nebenröhre 36 fließt kann seine kinetische Energie an den Generator 54 über den Turbinenantrieb 56 abgeben. Anschließend fließt das Wasser 22 wieder in das Fließgewässer 16 zurück. Dieser Betriebsmodus lässt sich vorwiegend bei einem normalen Wasserstand des Fließgewässers 16 mit dem Abzweigelement 34 einstellen.

Fig. 6 zeigt einen Teilausschnitt des Fließgewässers 16 im Querschnitt. Das Fließgewässer 16 befindet sich in seinem Flussbett 71. Bei Hochwasser gelangt das Wasser 22 über die Ufer 14 bis an einen Damm 72. Die gestrichelte Linie 74 deutet die Wasseroberfläche bei Hochwasser an. Die durchgezogene Linie 76 im Flussbett 71 zeigt die Wasseroberfläche bei Normalwasser 76. Das Wasser 22 geht dabei nur bis an das Ufer 14. Damit verhindert wird, dass auch der Damm 72 überschwemmt wird, lässt sich im vorliegenden Ausführungsbeispiel die Antriebsturbine 62 in der Hauptröhre 12 einschalten. Dadurch werden neben den Wasservolumen, welche durch das Flussbett 71 transportiert werden, auch noch erhebliche Wassermengen durch die Hauptröhre 12 geleitet. Bei der Wassermenge kommt es regelmäßig auf die Leistung der Antriebsturbine 62 an. Je höher die Leistung ist, desto mehr Wasser 22 fließt durch die Hauptröhre 12 des Hochwasserschutzsystems 10. Die Hauptröhre 12 dient gleichzeitig auch als stabiler Wall für den Hochwasserschutz oder zum Stabilisieren zumindest des Damms 72.

Die Antriebsturbine 62 verfügt über die Turbinenschaufeln 64, welche rotationssymmetrisch um die Antriebswelle 66 angeordnet sind. Die Turbinenschaufeln 64 drücken das Wasser 22 mit hohem Druck und damit mit einer erhöhten Geschwindigkeit durch die Hauptröhre 12.

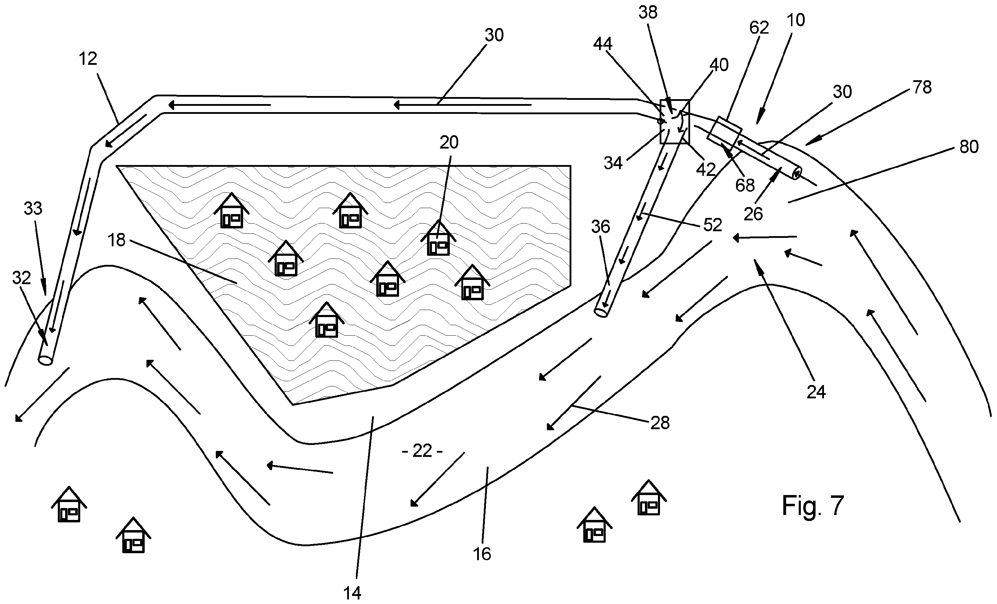

In Fig. 7 wird das erfindungsgemäße Hochwasserschutzsystem 10 gezeigt. Das Hochwasserschutzsystem 10 weist ebenfalls die Hauptröhre 12 auf, welche in diesem Ausführungsbeispiel auf einem möglichst kurzen Weg an dem hochwassergefährdeten Gebiet 18 mit seinen Gebäuden 20 vorbeigeführt wird. Die Gebäude 20 stehen symbolisch für ein Dorf, eine kleine Ansiedlung oder eine Stadt. Bei Hochwasser des Fließgewässers sind diese Gebäude 20 stark betroffen und können erheblich von dem übertretenden Wasser beschädigt werden.

Die Hauptröhre 12 nimmt daher auch in diesem Ausführungsbeispiel das Wasser 22 in dem höher gelegenen oberen Bereich 24 des Fließgewässers 16 mit dem einleitenden Rohrende 26 auf. Das einleitende Rohrende liegt dabei im äußeren Bereich 78 eines Meanders 80 des Fließgewässers 16. in diesem Bereich 78 halten sich wegen der hohen Fließgeschwindigkeit des Fließgewässers 16 praktisch keine Lebewesen, insbesondere Fische auf. Hierdurch kann sich auch eine Tierschutzvorrichtung 58, wie sie in dem Ausführungsbeispiel von Figur 1 gezeigt ist, erübrigen.

Die Fließrichtung des Wassers 22 wird durch die Pfeile 28 im Fließgewässer 16, durch die Pfeile 30 in der Hauptröhre 12 angedeutet. Die Hauptröhre 12 wird an dem hochwassergefährdeten Gebiet 18 vorbeigeführt und mündet mit dem ausleitenden Rohrende 32 in dem tiefer gelegenen unteren Bereich 33 des Fließgewässers 16. Die Hauptröhre 12 bildet somit einen Bypass zum Fließgewässer 16, um die Wassermengen schneller um das hochwassergefährdeten Gebiet 18 bewegen zu können.

Im oberen Bereich 24 des Fließgewässers 16 ist in der Hauptröhre 12 das Abzweigelement 34 eingesetzt. Das Abzweigelement 34 zweigt die Fließrichtung 30 der Hauptröhre 12 in die Nebenröhre 36 ab. Das in die Hauptröhre 12 eintretende Wasser 22 kann auf diese Weise vor dem hochwassergefährdeten Gebiet 18 direkt wieder in das Fließgewässer 16 eingeleitet werden.

Das Abzweigelement 34 verfügt entsprechend dem Ausführungsbeispiel von Figur 1 über die einstellbare Absperrvorrichtung mit dem Schieber 40, welcher wahlweise den Durchfluss durch die Hauptröhre 12 oder die Nebenröhre 36 leitet. Dazu sperrt die Absperrvorrichtung 38 entweder einen Röhrenabzweig 42 zur Nebenröhre 36 oder einen Röhrenabzweig 44 zur Hauptröhre 12. die Arbeitsweise des Abzweigelement 34 entspricht den zuvor beschriebenen Ausführungsbeispielen.

Bei normalem Wasserstand, ist eine beschleunigte Weiterleitung des Wassers um das hochwassergefährdete Gebiet 18 nicht erforderlich. Daher wird in diesem Fall das Wasser mit dem Abzweigelement 34 in die Nebenröhre 36 geleitet, wie es in Figur 2 dargestellt ist. Mit Pfeilen 52 wird die Fließrichtung der Nebenröhre 36 angedeutet. Die Nebenröhre 36 mündet ebenfalls im oberen Bereich 24 vor dem hochwassergefährdeten Gebiet 18. Der Generator 68 ist vor dem Abzweigelement 34 angeordnet. Der Generator 68 wird mit dem Turbinenantrieb 62 angetrieben wird. Die Nebenröhre 36 ist der Art ausgestaltet, dass ein hinreichendes Gefälle vorhanden ist, um ausreichende kinetische Energie für den Generator 54 zu erzeugen. Der Strom des Generators 68 kann beispielsweise die umliegenden Gebäude 20 mit elektrischer Energie versorgen.

Im Falle von Hochwasser ist das Abzweigelement 34 so eingestellt, dass nur die Hauptröhre 12 durchgängig ist. Der Generator 68 wird dann in Umkehrfunktion als Elektromotor betrieben, welcher den Turbinenantrieb 56 antreibt. Der Turbinenantrieb 56 saugt dann das Wasser 22 aus dem Fließgewässer 16 in die Hauptröhre 12 an. Das Wasser 22 wird mit der Antriebsturbine 62 beschleunigt um das hochwassergefährdete Gebiet 18 mit erhöhter Fließgeschwindigkeit herumgeleitet und wieder im unteren Bereich in das Fließgewässer 16 eingeleitet.

**Bezugszeichenliste**

| | | | |
|---|---|---|---|
| 10 | Hochwasserschutzsystem | 62 | Antriebsturbine |
| 12 | Hauptröhre | 64 | Turbinenschaufeln |
| 14 | Ufer | 66 | Antriebswelle |
| 16 | Fließgewässer | 67 | Leitschaufeln |
| 18 | Hochwassergefährdetes Gebiet | 68 | Generator |
| 20 | Gebäude | 70 | Gefälle |
| 22 | Wasser | 71 | Flussbett |
| 24 | Oberer Bereich | 72 | Damm |
| 26 | einleitendes Rohrende | 74 | Hochwasser |
| 28 | Fließrichtung im Fließgewässer | 76 | Normalwasser |
| 30 | Fließrichtung in der Hauptröhre | 78 | äußere Bereich |
| 32 | ausleitendes Rohrende | 80 | Meander |
| 33 | unterer Bereich | | |
| 34 | Abzweigelement | | |
| 36 | Nebenröhre | | |
| 38 | Absperrvorrichtung | | |
| 40 | Schieber | | |
| 42 | Röhrenabzweig zur Nebenröhre | | |
| 44 | Röhrenabzweig zur Hauptröhre | | |
| 46 | Elektromotor | | |
| 48 | Steuerung | | |
| 49 | Signalleitung | | |
| 50 | Wasserstandssensor | | |
| 51 | Steuerungsleitung | | |
| 52 | Fließrichtung der Nebenröhre | | |
| 54 | Generator | | |
| 56 | Turbinenantrieb | | |
| 58 | Tierschutzvorrichtung | | |
| 60 | Sieb | | |

## Patentansprüche

1. Hochwasserschutzsystem (10) an einem Fließgewässer (16) mit einem hochwassergefährdetem Bereich (18), enthaltend eine Hauptröhre (12) entlang des Fließgewässers (16) in diesem hochwassergefährdetem Bereich (18), wobei zumindest Teile des Fließgewässers (16) in Fließrichtung (28) durch die Hauptröhre (12) geleitet werden, eine Antriebsturbine (62) in der Hauptröhre (12) zur Erhöhung der Fließgeschwindigkeit des Fließgewässers (16) bei Hochwasser in der Hauptröhre (12) vorgesehen ist, wobei die Hauptröhre (12) wieder in das Fließgewässer (16) mündet **dadurch gekennzeichnet, dass** wenigstens ein Abzweigelement (34) mit wenigstens zwei Röhrenabzweigungen (42, 44) vorgesehen ist, wobei der erste Röhrenabzweig (44) in die Hauptröhre (12) und der zweite Röhrenabzweig (42) in eine Nebenröhre (36) führt, wobei das Abzweigelement (34) mit einer einstellbaren Absperrvorrichtung (38) ausgebildet ist, welche einen Röhrenabzweig (42, 44) absperrt oder freigibt.

2. Hochwasserschutzsystem (10) an einem Fließgewässer (16) mit einem hochwassergefährdeten Bereich (18) nach Anspruch 1, **dadurch gekennzeichnet, dass** die Absperrvorrichtung einen Schieber (40) aufweist, der den Durchfluss der ersten Röhrenabzweigung (42) und/oder der zweiten Röhrenabzweigung (44) sperrt.

3. Hochwasserschutzsystem (10) an einem Fließgewässer (16) mit einem hochwassergefährdeten Bereich (18) nach einem der Ansprüche 1 oder 2, **dadurch gekennzeichnet, dass** die Absperrvorrichtung (38) einen mechanischen, elektrischen, hydraulischen, pneumatischen Antrieb zur Betätigung des Absperr- oder Freigabevorgangs aufweist.

4. Hochwasserschutzsystem (10) an einem Fließgewässer (16) mit einem hochwassergefährdeten Bereich (18) nach einem der Ansprüche 1 bis 3, **dadurch gekennzeichnet, dass** eine prozessorgesteuerte Steuerung (48) für die Absperrvorrichtung (38) vorgesehen ist.

5. Hochwasserschutzsystem (10) an einem Fließgewässer (16) mit einem hochwassergefährdeten Bereich (18) nach einem der Ansprüche 1 bis 4, **dadurch gekennzeichnet, dass** wenigstens ein Wasserstandssensor (50) vorgesehen ist, welcher den Wasserstand des Fließgewässers (16) erfasst und an die prozessorgesteuerte Steuerung (48) der Absperrvorrichtung (38) zur Auswertung übermittelt.

6. Hochwasserschutzsystem (10) an einem Fließgewässer (16) mit einem hochwassergefährdeten Bereich (18) nach einem der Ansprüche 4 oder 5, **dadurch gekennzeichnet, dass** die Steuerung (48) bei einem Schwellwert für den Wasserstand die Absperrvorrichtung (38) aktiviert und entweder den ersten Rohrabzweig (42) oder den zweiten Rohrabzweig (44) freigibt bzw. sperrt.

7. Hochwasserschutzsystem (10) an einem Fließgewässer (16) mit einem hochwassergefährdeten Bereich (18) nach einem der Ansprüche 4 bis 6, **dadurch gekennzeichnet, dass** eine künstliche Intelligenz den Steuerungsvorgang unterstützt.

8. Hochwasserschutzsystem (10) an einem Fließgewässer (16) mit einem hochwassergefährdeten Bereich (18) nach einem der Ansprüche 1 bis 7, **dadurch gekennzeichnet, dass** die Nebenröhre (36) des zweiten Röhrenabzweigs (42) in das Fließgewässer (16) zurückgeführt wird, wobei ein Generator (54) zur Stromerzeugung in dem zweiten Röhrenabzweig (42) vorgesehen ist.

9. Hochwasserschutzsystem (10) an einem Fließgewässer (16) mit einem hochwassergefährdeten Bereich (18) nach Anspruch 8, **dadurch gekennzeichnet, dass** ein Gefälle für den zweiten Röhrenabzweig (42) vorgesehen ist.

10. Hochwasserschutzsystem (10) an einem Fließgewässer (16) mit einem hochwassergefährdeten Bereich (18) nach einem der Ansprüche 1 bis 9, **dadurch gekennzeichnet, dass** wenigstens eine der Röhren (12, 36) an einem äußeren Bereich (78) eines Meanders (80) des Fließgewässers (16) angeordnet ist.

11. Hochwasserschutzsystem (10) an einem Fließgewässer (16) mit einem hochwassergefährdeten Bereich (18) nach einem der Ansprüche 1 bis 10, **dadurch gekennzeichnet, dass** eine Tierschutzvorrichtung (58) vorgesehen ist, welche das Eindringen von Tieren in die Hauptröhre (12) verhindert.
